(19) **Europäisches Patentamt / European Patent Office / Office européen des brevets**

(11) **EP 4 564 690 A1**

(12) **EUROPEAN PATENT APPLICATION**
published in accordance with Art. 153(4) EPC

(43) Date of publication:
**04.06.2025 Bulletin 2025/23**

(21) Application number: **23854246.8**

(22) Date of filing: **02.08.2023**

(51) International Patent Classification (IPC):
*H04B 7/0413* (2017.01)

(52) Cooperative Patent Classification (CPC):
**H04B 7/0413**

(86) International application number:
**PCT/CN2023/110711**

(87) International publication number:
**WO 2024/037342 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.08.2022 CN 202210976651**

(71) Applicant: **Huawei Technologies Co., Ltd.**
**Shenzhen, Guangdong 518129 (CN)**

(72) Inventors:
• **DAI, Jingyu**
  **Shenzhen, Guangdong 518129 (CN)**
• **SUN, Xiaoguang**
  **Shenzhen, Guangdong 518129 (CN)**
• **ZHANG, Qingchuan**
  **Shenzhen, Guangdong 518129 (CN)**
• **LIU, Xialing**
  **Shenzhen, Guangdong 518129 (CN)**
• **LI, Liang**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **SIGNAL PROCESSING METHOD AND RELATED APPARATUS**

(57) Embodiments of this application disclose a signal processing method. The method is applied to a communication apparatus, and includes: The communication apparatus includes M baseband ports divided into P sectors, N radio frequency channels, and M antennas divided into P sectors, where M is greater than N; performs, based on a first matrix, weighted processing on signals transmitted by the M baseband ports, and maps the signals to the N radio frequency channels; and performs, based on a second matrix, weighted processing on signals transmitted by the N radio frequency channels, and maps the signals to the M antennas. Column matrices corresponding to different sectors in the first matrix are orthogonal to each other, to ensure high irrelevancy between signals in the different sectors. The column matrices include a plurality of weights. Row matrices corresponding to different sectors in the second matrix are orthogonal to each other, and the signals transmitted by the M baseband ports in the N radio frequency channels may be separated based on the M baseband ports. The row matrices include a plurality of weights. In this way, a signal transmitted by a baseband port in a same sector is transmitted to an antenna in the same sector.

FIG. 4

## Description

This application claims priority to Chinese Patent Application No. 202210976651.9, filed with the China National Intellectual Property Administration on August 15, 2022 and entitled "SIGNAL PROCESSING METHOD AND RELATED APPARATUS", which is incorporated herein by reference in its entirety.

## TECHNICAL FIELD

This application relates to the field of communication technologies, and in particular, to a signal processing method and a related apparatus.

## BACKGROUND

In a communication apparatus, a baseband transmits a signal to a radio frequency unit, and the radio frequency unit amplifies the signal and then sends it to an antenna to be radiated out in a form of radio waves. Specifically, for a multi-channel multi-antenna communication apparatus, data of a plurality of data streams may be simultaneously sent on a same time-frequency resource. The data streams are mapped to a plurality of baseband ports (ports) by using precoding codebook indexes (Precoding Matrix Indexes, PMIs), each of the baseband ports is allocated to be mapped to one radio frequency channel (channel, CH), and the radio frequency channels are mapped to a plurality of antennas (antennas, ANTs). When the communication apparatus includes N radio frequency channels, the N radio frequency channels indicate that the communication apparatus includes N degrees of freedom, where N is a positive integer. In this case, the communication apparatus may have N data streams on a same time-frequency resource.

Currently, when a plurality of intra-frequency baseband ports are mapped to a same radio frequency channel, signals of the plurality of baseband ports are simultaneously transmitted by an antenna to which the radio frequency channel is mapped. Signals from different baseband ports interfere with each other in the radio frequency channel. Therefore, mixed signals transmitted by the antenna are subject to interference. Consequently, a terminal that receives the signals cannot distinguish between baseband ports from which the signals come. Based on the foregoing reason, a quantity of existing baseband ports needs to be less than or equal to a quantity of radio frequency channels.

However, in the case that the quantity of baseband ports is less than or equal to the quantity of radio frequency channels, when the baseband port sends the signal, a radio frequency channel corresponding to the baseband port transmits the signal and another radio frequency channel (a radio frequency channel not corresponding to the baseband port) does not transmit the signals. This reduces power utilization of the communication apparatus. Therefore, there is an urgent need for a signal processing method in which a quantity of baseband ports is greater than a quantity of radio frequency channels.

## SUMMARY

According to a first aspect, an embodiment of this application provides a signal processing method. The method is applied to a communication apparatus, and the communication apparatus includes M baseband ports, N radio frequency channels, and M antennas, where M is greater than N, M is a positive integer, and N is a positive integer; and the method includes:

The communication apparatus divides the M baseband ports into P sectors, and divides the M antennas into P sectors, where M is a multiple of P, and P is a positive integer;

the communication apparatus performs, based on a first matrix, weighted processing on signals transmitted by the M baseband ports, and maps the signals to the N radio frequency channels, where a plurality of weights included in the first matrix are divided based on the P sectors, each column of weights in the first matrix forms a column matrix, and column matrices in different sectors in the first matrix are orthogonal to each other; and

the communication apparatus performs, based on a second matrix, weighted processing on signals transmitted by the N radio frequency channels, and maps the signals to the M antennas, to transmit, to an antenna in a same sector, a signal transmitted by a baseband port in the same sector, where a plurality of weights included in the second matrix are divided based on the P sectors, each row of weights in the second matrix forms a row matrix, and row matrices in different sectors in the second matrix are orthogonal to each other.

According to the signal processing method provided in this embodiment of this application, the communication apparatus performs, based on the second matrix, weighted processing on the signals transmitted by the N radio frequency channels, and maps the signals to the M antennas. Phase superposition or reverse cancellation of the signals is implemented by designing the first matrix and the second matrix, so that a signal transmitted by a baseband port in a same sector is transmitted to an antenna in the same sector. In this way, power utilization of the communication apparatus is further improved.

In a possible implementation, the first matrix includes: The first matrix includes N rows * M columns of weights, and each column of weights corresponds to a baseband port in one sector; any row of weights in the first matrix corresponds to one of the N radio frequency channels, and any column of weights in the first matrix corresponds to any one of the M baseband ports; two column matrices included in any two sectors in the first matrix are orthogonal to each other; and a sum of squares of weights of a same column in weights included in a same sector in the first matrix is equal to 1.

The plurality of weights included in the first matrix are divided based on the P sectors, and the column matrices in the different sectors in the first matrix are orthogonal to each other. Therefore, in a process in which the signals of the M baseband ports are mapped to the N radio frequency channels, high irrelevancy between signals in the different sectors is ensured, and mutual interference between adjacent sectors is avoided.

In a possible implementation, the second matrix includes: The second matrix includes M rows * N columns of weights, and each row of weights corresponds to an antenna in one sector; any row of weights in the second matrix corresponds to one of the M antennas, and any column of weights in the second matrix corresponds to any one of the N radio frequency channels; two row matrices included in any two sectors in the second matrix are orthogonal to each other; and a sum of squares of weights of a same row in weights included in a same sector in the second matrix is equal to 1.

The plurality of weights included in the second matrix are divided based on the P sectors, and the row matrices in the different sectors in the second matrix are orthogonal to each other. Therefore, the signals transmitted by the M baseband ports in the N radio frequency channels may be separated based on the M baseband ports, to effectively reduce mutual interference between the signals.

In a possible implementation, that the two column matrices included in any two sectors in the first matrix are orthogonal to each other includes: a first submatrix and a second submatrix included in the first matrix, where a weight included in the first submatrix corresponds to a first sector, a weight included in the second submatrix corresponds to a second sector, the first sector corresponds to M/P baseband ports in the M baseband ports, the second sector corresponds to M/P baseband ports in the M baseband ports, and the baseband port corresponding to the first sector is inconsistent with the baseband port corresponding to the second sector; and a product of any column matrix included in the first submatrix and any column matrix included in the second submatrix is equal to or approximately equal to 0.

In a possible implementation, that the two rows of weights corresponding to any two sectors in the second matrix are orthogonal to each other includes: a third submatrix and a fourth submatrix included in the second matrix, where a weight included in the third submatrix corresponds to a third sector, a weight included in the fourth submatrix corresponds to a fourth sector, the third sector corresponds to M/P antennas in the M antennas, the fourth sector corresponds to M/P antennas in the M antennas, and the antenna corresponding to the third sector is inconsistent with the antenna corresponding to the fourth sector; and a product of any row matrix included in the third submatrix and any row matrix included in the fourth submatrix is equal to or approximately equal to 0.

In a possible implementation, a combination order of a plurality of column matrices included in the first matrix is consistent with a combination order of a plurality of row matrices included in the second matrix. According to the method, implementation flexibility of this solution is improved.

In a possible implementation, the communication apparatus adjusts a weight corresponding to the baseband port in the first matrix. According to the method, implementation flexibility of this solution is improved.

In a possible implementation, that the communication apparatus adjusts the weight corresponding to the baseband port in the first matrix includes: The weight corresponding to the baseband port in the first matrix includes: a positive first weight, a negative first weight, a positive second weight, and/or a negative second weight; and when load of the baseband port increases, the communication apparatus increases a difference between the first weight and the second weight. In this way, flexible allocation of a degree of freedom is implemented.

In a possible implementation, that the communication apparatus adjusts the weight corresponding to the baseband port in the first matrix includes: When only M/P baseband ports corresponding to a target sector in the M baseband ports corresponding to the P sectors have data to be transmitted, the communication apparatus sets weights corresponding to the target sector in the first matrix to 1 and 0. In combination with a time division method, the baseband port is controlled to send the signal, so that a maximum degree of freedom is obtained for the target sector, and interference between the sectors can be ignored.

In a possible implementation, that the communication apparatus adjusts the weight corresponding to the baseband port in the first matrix includes: The weight corresponding to the baseband port in the first matrix includes: a positive first weight, a negative first weight, a positive second weight, and/or a negative second weight, and the communication apparatus makes the first weight and the second weight to be equal, to increase a diversity gain of the baseband port.

In a possible implementation, 2M=3N. For example, the communication apparatus includes three baseband ports, two radio frequency channels, and three antennas. For another example, the communication apparatus includes six baseband ports, four radio frequency channels, and six antennas. For another example, the communication apparatus includes 12 baseband ports, eight radio frequency channels, and 12 antennas. For another example, the communication apparatus includes 24 baseband ports, 16 radio frequency channels, and 24 antennas. This can be deduced by analogy.

According to a second aspect, an embodiment of this application provides a communication apparatus. The communication apparatus includes a processing module and a transceiver module. The processing module is configured to process information transmitted by the transceiver module.

The communication apparatus is configured to perform the method according to any one of the first aspect.

According to a third aspect, an embodiment of this application provides a correction apparatus. The communication apparatus includes:

a memory, including instructions; and
a processor, where when the processor executes the instructions, the correction apparatus is caused to implement the method according to any one of the first aspect.

According to a fourth aspect, an embodiment of this application provides a computer-readable storage medium. The computer-readable storage medium stores a computer program, and when the computer program is executed by a processor, the method according to the first aspect is implemented.

According to a fifth aspect, an embodiment of this application provides a computer program product, including a computer program. When the computer program is executed by a processor, the method according to the first aspect is implemented.

According to a sixth aspect, an embodiment of this application provides a network device. The network device includes a correction apparatus, and the correction apparatus is the communication apparatus according to any one of the first aspect.

According to a seventh aspect, an embodiment of this application provides a communication system. The communication system includes a network device, and the network device is the network device according to any one of the sixth aspect.

## BRIEF DESCRIPTION OF DRAWINGS

FIG. 1 is a diagram of a structure of a communication apparatus according to an embodiment of this application;
FIG. 2 is a diagram of a communication apparatus;
FIG. 3 is a diagram of an embodiment of a signal processing method according to an embodiment of this application;
FIG. 4 is a diagram of a structure of a communication apparatus according to an embodiment of this application;
FIG. 5 is a diagram of a first matrix according to an embodiment of this application;
FIG. 6 is a diagram of a second matrix according to an embodiment of this application;

FIG. 7 is a diagram of an application scenario according to an embodiment of this application;
FIG. 8 is a diagram of another application scenario according to an embodiment of this application;
FIG. 9 is a diagram of a first matrix according to an embodiment of this application;
FIG. 10 is a diagram of a second matrix according to an embodiment of this application; and
FIG. 11 is a diagram of an embodiment of a communication apparatus 1100 according to an embodiment of this application.

## DESCRIPTION OF EMBODIMENTS

The following clearly and completely describes technical solutions in embodiments of this application with reference to the accompanying drawings in embodiments of this application. It is clear that, the described embodiments are merely some of but not all of embodiments of this application. All other embodiments obtained by a person skilled in the art based on embodiments of this application without creative efforts shall fall within the protection scope of this application.

In the specification, the claims, and the accompanying drawings of this application, terms such as "first" and "second" are used for distinguishing similar objects, but are not necessarily used for describing a particular order or sequence. It should be understood that, data used in such a way may be interchangeable in appropriate circumstances, so that embodiments described herein can be implemented in an order other than the order illustrated or described herein. Moreover, terms "include" and "have" and any other variants thereof mean to cover a non-exclusive inclusion. For example, a process, a method, a system, a product, or a device that includes a list of steps or modules is not necessarily limited to steps or modules expressly listed, but may include other steps or modules not expressly listed or inherent to such a process, method, product, or device. Division of modules in this application is logical division. During actual application, there may be another division manner. For example, a plurality of modules may be combined or integrated into another system, or some features may be ignored or not performed.

In addition, in this application, unless otherwise explicitly specified and limited, terms such as "connect", "connection", and "arrange" should be understood in a broad sense. For example, the "connection" may be a fixed connection, a detachable connection, or an integrated connection; may be a mechanical connection or an electrical connection; or may be a direct connection, an indirect connection through an intermediate medium, or a connection inside two elements or an interaction relationship between two elements. A person of ordinary skill in the art may understand specific meanings of the foregoing terms in this application based on a specific case.

A communication apparatus provided in embodiments of this application may be applied to a multi-channel multi-antenna system device, such as a terminal device, a network device, a wireless backhaul device, a satellite communication device, or a detection radar.

A network device may be considered as a subnet of an operator network, and is an implementation system between a service node and a terminal device in the operator network. To access the operator network, the terminal device first accesses the network device, and then may be connected to the service node of the operator network via the network device. The network device in embodiments of this application is a device that provides a wireless communication function for the terminal device, and may also be referred to as a (radio) access network ((radio) access network, (R)AN). The network device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission and reception point (transmission and reception point, TRP), a transmission point (transmission point, TP), a small cell device (pico), a mobile switching center, a network device in a future network, or the like. In systems using different radio access technologies, a name of a device having an access network device function may vary.

The terminal device in embodiments of this application includes but is not limited to a mobile phone, an internet of things device, a smart home device, an industrial control device, a vehicle device, an uncrewed aerial vehicle device, or the like. In embodiments of this application, the terminal device includes various terminal devices or apparatuses having a wireless communication function, such as a mobile phone (also referred to as a "cellular" phone) and a computer having a mobile terminal, or may be a portable, pocket-sized, handheld, computer built-in, or vehicle-mounted mobile apparatus, which exchange a language and/or data with the radio access network. For example, the terminal device is a device such as a personal communication service (personal communication service, PCS) phone, a cordless phone, a session initiation protocol (SIP) phone, a wireless local loop (wireless local loop, WLL) station, or a personal digital assistant (personal digital assistant, PDA). The terminal device may also be referred to as a system, a subscriber unit (subscriber Unit), a subscriber station (subscriber station), a mobile station (mobile station), a mobile (mobile) console, a remote station (remote station), an access point (access point), a remote terminal (remote terminal), an access terminal (access terminal), a user terminal (user terminal), a user agent (user agent), a user device (user device), or user equipment.

The terminal device is, for example, a vehicle, a vehicle-mounted device, a vehicle-mounted module or unit, an aircraft (including but not limited to an uncrewed aerial vehicle), an airborne device, an airborne module or unit, a drive test infrastructure device, a handheld device, a wearable device, a computing device, or another processing device connected to a wireless modem, such as vehicle user equipment (vehicle user equipment, VUE) or air conditioner user equipment.

A signal processing method provided in this application may be applied to various communication systems, which, for example, may be an internet of things (internet of things, IoT), a narrowband internet of things (narrowband internet of things, NB-IoT), a long term evolution (long term evolution, LTE) system, or may be a 5th generation (5G) communication system, or may be an LTE and 5G hybrid architecture, a 5G new radio (new radio, NR) system, and a new communication system emerging in future communication development. The 5G communication system in this application may include at least one of a non-standalone (non-standalone, NSA) 5G communication system and a standalone (standalone, SA) 5G communication system. Alternatively, the communication system may be a public land mobile network (public land mobile network, PLMN), a device-to-device (device-to-device, D2D) network, a machine-to-machine (machine to machine, M2M) network, or another network.

In addition, embodiments of this application are further applicable to another future-oriented communication technology, for example, 6G. A network architecture and a service scenario described in this application are intended to describe the technical solutions of this application more clearly, and do not constitute a limitation on the technical solutions provided in this application. A person of ordinary skill in the art may learn that, with evolution of the network architecture and emergence of a new service scenario, the technical solutions provided in this application are also applicable to a similar technical problem.

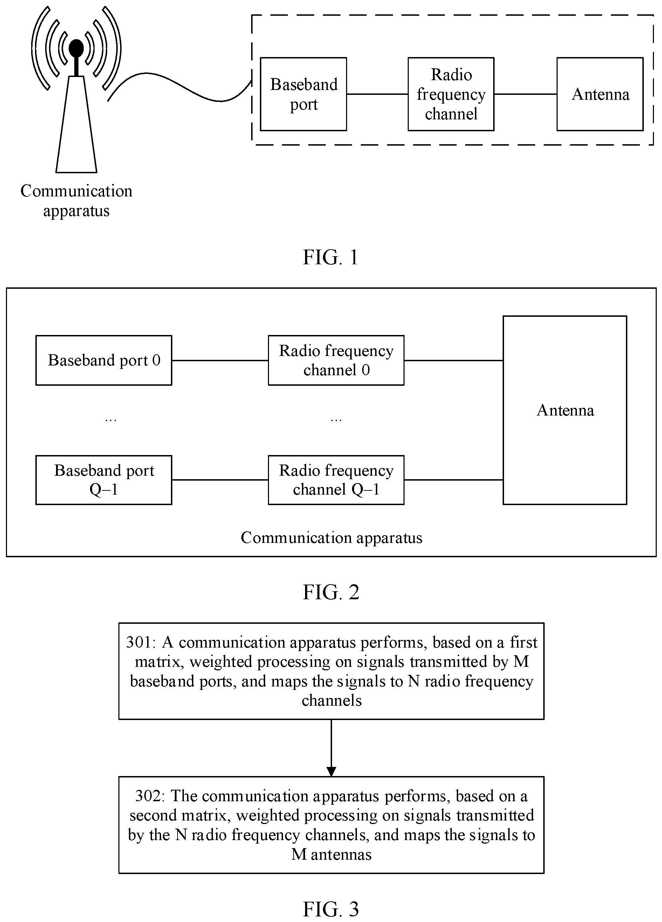

A structure of a communication apparatus in an embodiment of this application is shown in FIG. 1. FIG. 1 is a diagram of a structure of a communication apparatus according to an embodiment of this application. The communication apparatus provided in embodiments of this application includes a baseband port, a radio frequency channel, and an antenna. Specifically, in the communication apparatus, a baseband transmits a signal to a radio frequency unit; and the signal is amplified by the radio frequency unit and then sent to the antenna, and is radiated in a form of a radio wave. Specifically, for a multi-channel multi-antenna communication apparatus, data of a plurality of data streams may be simultaneously sent on a same time-frequency resource. The data streams are mapped to a plurality of baseband ports (ports) by using precoding codebook indexes (Precoding Matrix Indexes, PMIs), each of the baseband ports is allocated and mapped to one radio frequency channel (channel, CH), and the radio frequency channels are mapped to a plurality of antennas (antennas, ANTs). When the communication apparatus includes N radio frequency channels, the N radio frequency channels indicate that the communication apparatus includes N degrees of freedom, where N is a positive integer. In this case, the communication apparatus may have N data streams on a same time-frequency resource.

Currently, when a plurality of intra-frequency baseband ports are mapped to a same radio frequency channel, signals of the plurality of baseband ports are simultaneously transmitted by an antenna to which the radio frequency channel is mapped. Signals from different baseband ports interfere with each other in the radio frequency channel. Therefore, mixed signals transmitted by the antenna are subject to interference. Consequently, a terminal that receives the signals cannot distinguish between baseband ports from which the signals come. Based on the foregoing reason, a quantity of existing baseband ports needs to be less than or equal to a quantity of radio frequency channels. For example, FIG. 2 is a diagram of a communication apparatus. For example, the communication apparatus includes Q baseband ports and Q radio frequency channels, each of the baseband ports is mapped to one radio frequency channel, and each of the baseband ports maps a signal to an antenna through the radio frequency channel. According to the foregoing method, it is ensured that signals transmitted by the baseband ports do not interfere with each other in the radio frequency channels. However, when the quantity of baseband ports is less than or equal to the quantity of radio frequency channels, and when the baseband port sends the signal, a radio frequency channel corresponding to the baseband port transmits the signal, and another radio frequency channel (a radio frequency channel not corresponding to the baseband port) does not transmit the signals. Consequently, power utilization of the communication apparatus is reduced.

Based on this, an embodiment of this application provides a signal processing method. The method is applied to a communication apparatus, and the communication apparatus includes M baseband ports, N radio frequency channels, and M antennas, where M is greater than N, and both M and N are positive integers. The M baseband ports are divided into P sectors, and the M antennas are divided into P sectors. The communication apparatus performs, based on a first matrix, weighted processing on signals transmitted by the M baseband ports, and maps the signals to the N radio frequency channels. A plurality of weights included in the first matrix are divided based on the P sectors, and column matrices in different sectors in the first matrix are orthogonal to each other. Therefore, in a process in which the signals of the M baseband ports are mapped to the N radio frequency channels, high irrelevancy between signals in the different sectors is ensured, and mutual interference between adjacent sectors is avoided. The communication apparatus performs, based on a second matrix, weighted processing on signals transmitted by the N radio frequency channels, and maps the signals to the M antennas. A plurality of weights included in the second matrix are divided based on the P sectors, and row matrices in different sectors in the second matrix are orthogonal to each other. Therefore, the signals transmitted by the M baseband ports in the N radio frequency channels may be separated based on the M baseband ports, to effectively reduce mutual interference between the signals. Phase superposition or reverse cancellation of the signals is implemented by designing the first matrix and the second matrix, so that a signal transmitted by a baseband port in a same sector is transmitted to an antenna in the same sector. In this way, power utilization of the communication apparatus is further improved.

The following describes embodiments of this application with reference to the accompanying drawings. FIG. 3 is a diagram of an embodiment of a signal processing method according to an embodiment of this application. The signal processing method provided in this embodiment of this application includes the following steps.

301: A communication apparatus performs, based on a first matrix, weighted processing on signals transmitted by M baseband ports, and maps the signals to N radio frequency channels.

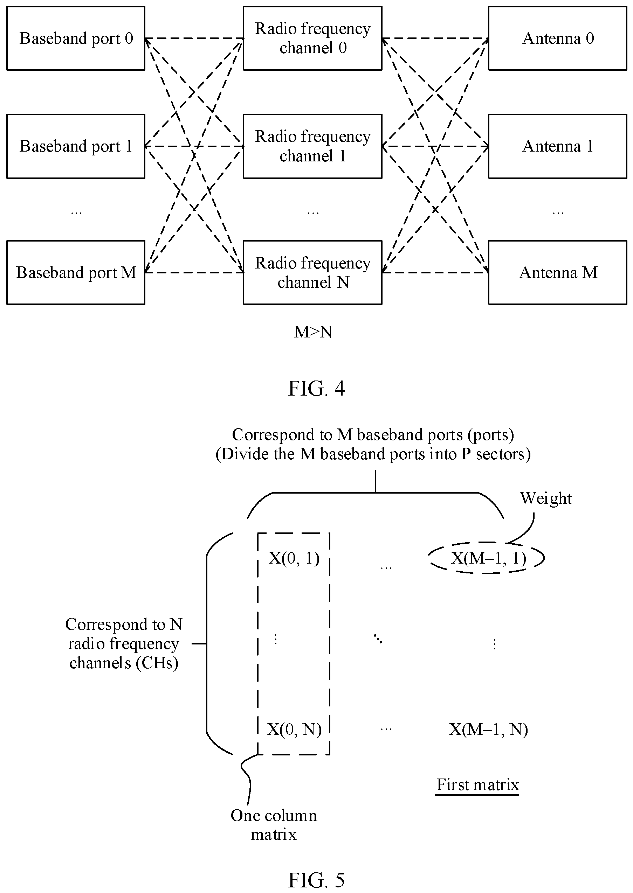

First, a communication apparatus to which the signal processing method provided in embodiments of this application is applied is described. FIG. 4 is a diagram of a structure of the communication apparatus according to an embodiment of this application. The communication apparatus includes the M baseband ports, the N radio frequency channels, and M antennas, where M is greater than N, M is a positive integer, and N is a positive integer. It should be noted that, in the communication apparatus, the M baseband ports are separately connected to the N radio frequency channels, and the N radio frequency channels are separately connected to the M antennas. In other words, in the communication apparatus, each of the baseband ports is connected to each of the radio frequency channels, and each of the radio frequency channels is connected to each of the antennas.

In a possible implementation, 2M=3N. For another example, the communication apparatus includes three baseband ports, two radio frequency channels, and three antennas. For another example, the communication apparatus includes six baseband ports, four radio frequency channels, and six antennas. For another example, the communication apparatus includes 12 baseband ports, eight radio frequency channels, and 12 antennas. For another example, the communication apparatus includes 24 baseband ports, 16 radio frequency channels, and 24 antennas. This can be deduced by analogy.

Then, the communication apparatus divides the M baseband ports based on sectors. Specifically, the M baseband ports are divided into P sectors, where M is a multiple of P, and P is a positive integer. For example, 12 baseband ports are divided into three sectors, and each of the sectors includes four baseband ports.

The communication apparatus divides the M antennas based on sectors. Specifically, the M antennas are divided into P sectors, where M is a multiple of P, and P is a positive integer. For example, 12 antennas are divided into three sectors, and each of the sectors includes four antennas.

It should be noted that, a relationship between the sector corresponding to the baseband port and the sector corresponding to the antenna is not limited in embodiments of this application. For ease of description, the sector corresponding to the baseband port is referred to as a baseband port sector, and the sector corresponding to the antenna is referred to as an antenna sector. An example in which the communication apparatus includes 12 baseband ports, eight radio frequency channels, and 12 antennas is used. A baseband port sector 1 includes a baseband port 0 to a baseband port 3, a baseband port sector 2 includes a baseband port 4 to a baseband port 7, and a baseband port sector 3 includes a baseband port 8 to a baseband port 11. An antenna sector 1 includes an antenna 1 to an antenna 4, an antenna sector 2 includes an antenna 5 to an antenna 8, and an antenna sector 3 includes an antenna 9 to an antenna 12. A signal in the baseband port sector 1 may be mapped to the antenna sector 1, a signal in the baseband port sector 2 may be mapped to the antenna sector 2, and a signal in the baseband port sector 3 may be mapped to the antenna sector 3. According to different designs of the first matrix and a second matrix, baseband port sectors may also be mapped to different antenna sectors. For example, the signal of the baseband port sector 1 may be mapped to the antenna sector 2, the signal of the baseband port sector 2 may be mapped to the antenna sector 1, and the signal of the baseband port sector 3 may be mapped to the antenna sector 3.

The first matrix is described below.

In this embodiment of this application, a weight matrix for performing weighted processing on the signals transmitted by the M baseband ports is referred to as a first matrix, and the first matrix includes a plurality of weights. The communication apparatus performs, based on the first matrix, weighted processing on the signals transmitted by the M baseband ports, and maps the signals to the N radio frequency channels.

Specifically, each column of weights in the first matrix forms a column matrix, and the plurality of weights included in the first matrix are divided based on the P sectors. In other words, each of the sectors corresponds to one or more column matrices. Column matrices in different sectors in the first matrix are orthogonal to each other. In this embodiment of this application, "orthogonal to each other" means that a product of two matrices is equal to 0 or approximately equal to 0.

For ease of understanding, refer to FIG. 5. FIG. 5 is a diagram of the first matrix according to an embodiment of this application.

Specifically, the first matrix includes M*N weights, and X(i, u) indicates any weight in the first matrix, where i is greater than or equal to 0, i is less than or equal to M-1, i is an integer, u is greater than or equal to 1, u is less than or equal to N, and u is an integer.

It may be understood that, a sequence number of the baseband port may start from 0, such as a baseband port 0 or a baseband port 1. Alternatively, a sequence number of the baseband port may start from 1, such as a baseband port 1 or a baseband port 2. This is not limited in embodiments of this application.

For example, a unit of the weight in this embodiment of this application includes an amplitude.

The first matrix includes N rows * M columns of weights, and each column of weights corresponds to a baseband port in one sector. Any row of weights in the first matrix corresponds to one of the N radio frequency channels, and any column of weights in the first matrix corresponds to any one of the M baseband ports. For example, a column of weights, namely, X(0, 1) to X(0, N), is considered as a column matrix, and X(0, 1) to X(0, N) correspond to a baseband port 0. A row of weights, namely, X(0, 1) to X(M-1, 1), is considered as a row matrix, and X(0, 1) to X(M-1, 1) correspond to a radio frequency channel 1. It may be understood that, row-column transposition may occur in the first matrix. Specifically, each row matrix in the first matrix corresponds to one baseband port, and each column matrix corresponds to one radio frequency channel. Correspondingly, row-column transposition occurs in the second matrix. Specifically, each row matrix in the second matrix corresponds to one radio frequency channel, and each column matrix corresponds to one antenna.

Two column matrices included in any two sectors in the first matrix are orthogonal to each other. For example, X(0, 1) to X(0, N) form a column matrix #1, and the column matrix #1 corresponds to a baseband port 0 (sector 1); and X(4, 1) to X(4, N) form a column matrix #4, and the column matrix #4 corresponds to a baseband port 4 (sector 2). A product of the column matrix #1 and the column matrix #4 is approximately equal to 0.

A sum of squares of weights of a same column in weights included in a same sector in the first matrix is equal to 1. For example, when M=12 and N=8, a sector 1 includes a baseband port 0 to a baseband port 3.

X(0, 1) to X(0, N) form a column matrix #1, and the column matrix #1 corresponds to the baseband port 0.

X(1, 1) to X(1, N) form a column matrix #2, and the column matrix #2 corresponds to the baseband port 1.

X(2, 1) to X(2, N) form a column matrix #3, and the column matrix #3 corresponds to the baseband port 2.

X(3, 1) to X(3, N) form a column matrix #4, and the column matrix #4 corresponds to the baseband port 3.

$[X(0, 1)]^2 + \cdots + [X(0, N)]^2 = 1$.

Further, that the two column matrices included in any two sectors in the first matrix are orthogonal to each other is specifically as follows:

a first submatrix and a second submatrix included in the first matrix, where a weight included in the first submatrix corresponds to a first sector, a weight included in the second submatrix corresponds to a second sector, the first sector corresponds to M/P baseband ports in the M baseband ports, the second sector corresponds to M/P baseband ports in the M baseband ports, and the baseband port corresponding to the first sector is inconsistent with the baseband port corresponding to the second sector; and a product of any column matrix included in the first submatrix and any column matrix included in the second submatrix is equal to or approximately equal to 0.

In an example, when M=12 and N=8, a sector 1 includes a baseband port 0 to a baseband port 3, and a sector 2 includes a baseband port 4 to a baseband port 7.

X(0, 1) to X(0, N) form a column matrix #1, and the column matrix #1 corresponds to the baseband port 0 and the sector 1.

X(5, 1) to X(5, N) form a column matrix #5, and the column matrix #5 corresponds to the baseband port 4 and the sector 2.

When the first submatrix is the column matrix #1 to a column matrix #4 (corresponding to the baseband port 0 to the baseband port 3), the first sector is the sector 1, the second submatrix is the column matrix #5 to a column matrix #8 (corresponding to the baseband port 4 to the baseband port 7), and the second sector is the sector 2. A product of the column matrix #1 and the column matrix #5 is approximately equal to 0.

Further, the weights included in the first matrix satisfy a condition that the two column matrices included in any two sectors in the first matrix are orthogonal to each other, and the sum of the squares of the weights of the same column in the weights included in the same sector in the first matrix is equal to 1. When the weights included in the first matrix satisfy the foregoing condition, there are a plurality of possible design solutions for the weights included in the first matrix. This is not specifically limited in embodiments of this application. For example, in the first matrix, weights in the different sectors are inconsistent. An example in which the first matrix includes three sectors is used. A weight of a sector 1 includes A1, B1, -A1, and/or -B1. A weight of a sector 2 includes A2, B2, -A2, and/or -B2. A weight of a sector 3 includes A3, B3, -A3, and/or -B3. A1, A2, and A3 are not equal; and B1, B2, and B3 are not equal.

Optionally, positive and negative weights are designed, so that the column matrices corresponding to the different sectors in the first matrix are orthogonal to each other. It should be noted that, row matrices corresponding to different sectors in the second matrix are orthogonal to each other, and the weights in the second matrix may be designed based on the positive and negative weights in the first matrix.

An example in which M=6 and N=4 is used. For example, the first matrix may be:

$$\begin{bmatrix} A & B & A & B & A & B \\ B & A & B & A & -A & -B \\ B & A & -A & -B & B & A \\ A & B & -B & -A & -B & -A \end{bmatrix}.$$

In another example, the first matrix may be:

$$\begin{bmatrix} A & B & A & B & A & B \\ B & A & B & A & -A & -B \\ B & A & -A & -B & -B & -A \\ A & B & -B & -A & B & A \end{bmatrix}.$$

In another example, the first matrix may be:

$$\begin{bmatrix} A & B & A & B & A & B \\ B & A & -B & -A & -A & -B \\ B & A & -A & -B & B & A \\ A & B & B & A & -B & -A \end{bmatrix}.$$

It may be understood that, any column may be deleted from a plurality of column matrices included in the first matrix. In this case, correspondingly, a corresponding row may be deleted from a plurality of row matrices included in the second matrix. M-1 baseband ports are mapped to the N radio frequency channels, and the N radio frequency channels are mapped to M-1 antennas. For example, the first matrix is:

$$\begin{bmatrix} A & B & A & B & \sqrt{A^2 + B^2} \\ B & A & B & A & -\sqrt{A^2 + B^2} \\ B & A & -A & -B & \sqrt{(A\char`\^2 + B\char`\^2)} \\ A & B & -B & -A & -\sqrt{(A\char`\^2 + B\char`\^2)} \end{bmatrix}.$$

Optionally, in this example, in a last column of the first matrix, namely, √(A^2+B^2), - √(A^2+B^2), √(A^2+B^2), and -√(A^2+B^2), A is made equal to B, to satisfy that A^2+B^2=1/3 (that is, A^2 + B^2 + A^2 + B^2+(√(A^2 + B^2))^2=2/6).

In another possible implementation, phase shift processing may be performed on the first matrix. For example, an original first matrix before a phase shift is:

$$\begin{bmatrix} A & B \\ B & A \\ B & A \\ A & B \end{bmatrix}.$$

Phase shift processing is performed on the original first matrix, to obtain the following first matrix:

$$\begin{bmatrix} A & j1*B \\ B & j1*A \\ B & j1*A \\ A & j1*B \end{bmatrix}.$$

A phase value is introduced into j1. After the phase shift, $|A|^2+|j*B|^2=A^2+B^2=1$ in the first matrix.

It should be noted that, j1 may be any value, provided that a second column of the first matrix, namely, j1*B, j1*A, j1*A, and j1*B, keeps a modulus length of BAAB.

Optionally, when the first matrix is a matrix obtained through the phase shift processing, the second matrix may be a matrix through phase shift processing, or may be a matrix without a phase shift. This is not limited in embodiments of this application. A phase difference between any two column matrices in the first matrix may be consistent with or inconsistent with a phase difference between any two row matrices in the second matrix. This is not limited in embodiments of this application.

Further, the communication apparatus may adjust a weight corresponding to the baseband port in the first matrix, including but not limited to: adjusting the weight based on load of the baseband port; or controlling a degree of freedom of the baseband port sector based on the weight in the first matrix; or controlling a diversity gain by adjusting the weight. The following separately provides descriptions.

(AA) Based on a load status of a sector corresponding to the baseband port, a weight corresponding to the sector in the first matrix is adjusted.

The weight corresponding to the baseband port in the first matrix includes: a positive first weight, a negative first weight, a positive second weight, and/or a negative second weight; and when the load of the baseband port increases, the communication apparatus increases a difference between the first weight and the second weight. Specifically, for a sector corresponding to a baseband port with heavy load, a difference between a first weight and a second weight in the sector is increased. For a sector corresponding to a baseband port with light load, a difference between a first weight and a second weight in the sector is reduced. For example, if load of a baseband port in a sector #1 is heavy, a difference between a first weight and a second weight in a column matrix corresponding to the sector #1 in the first matrix is increased; or if load of a baseband port in a sector #2 is light, a difference between a first weight and a second weight in a column matrix corresponding to the sector #2 in the first matrix is reduced. In this way, flexible allocation of a degree of freedom is implemented.

(BB) The degree of freedom of the baseband port sector is controlled based on the weight in the first matrix.

Specifically, when only M/P baseband ports corresponding to a target sector in the M baseband ports corresponding to the P sectors have data to be transmitted, the communication apparatus sets weights corresponding to the target sector in the first matrix to 1 and 0. For example, the communication apparatus may obtain a maximum degree of freedom for the target sector by using a time division method. When the data is transmitted in the target sector (that is, the baseband port in the target sector maps the signal to the radio frequency channel), no data is transmitted in another sector. For example, the communication apparatus includes three sectors, and when data needs to be transmitted only in a sector 1 within same time, the communication apparatus sets weights corresponding to the sector 1 in the first matrix to A=1 and B=0. Through the foregoing adjustment, a degree of freedom of the sector 1 reaches 2 (namely, a theoretical maximum value), and a maximum of two streams of data (corresponding to four radio frequency channels) may be transmitted. Interference between the sectors can be ignored.

(CC) The weight is adjusted to control the diversity gain.

The weight corresponding to the baseband port in the first matrix includes: a positive first weight, a negative first weight, a positive second weight, and/or a negative second weight, and the communication apparatus makes the first weight and the second weight to be equal, to increase the diversity gain of the baseband port. For example, a baseband port 0 and a baseband port 1 are used as an example. It is assumed that A=B, so that weights of the baseband port 0 and the baseband port 1 mapped to a radio frequency channel 1 to a radio frequency channel 4 are consistent, and relevance between the baseband port 0 and the baseband port is 1. In this way, power diversity gains of the baseband port 0 and the baseband port 1 are obtained.

302: The communication apparatus performs, based on the second matrix, weighted processing on signals transmitted by the N radio frequency channels, and maps the signals to the M antennas.

The second matrix is described below.

In this embodiment of this application, a weight matrix for performing weighted processing on the signals transmitted by the N radio frequency channels is referred to as a second matrix, and the second matrix includes a plurality of weights. The communication apparatus performs, based on the second matrix, weighted processing on the signals transmitted by the N radio frequency channels, and maps the signals to the M antennas.

Specifically, each column of weights in the second matrix forms a column matrix, and the plurality of weights included in the second matrix are divided based on the P sectors. In other words, each of the sectors corresponds to one or more column matrices. Column matrices in the different sectors in the second matrix are orthogonal to each other. In this embodiment of this application, "orthogonal to each other" means that a product of two matrices is equal to 0 or approximately equal to 0.

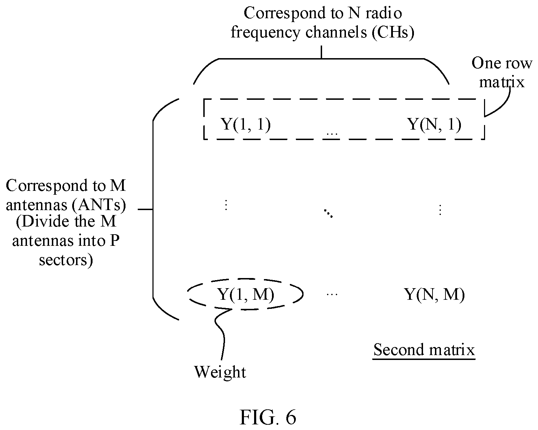

For ease of understanding, refer to FIG. 6. FIG. 6 is a diagram of the second matrix according to an embodiment of this application.

Specifically, the second matrix includes M*N weights, and Y(n, m) indicates any weight in the second matrix, where n is greater than 0, n is less than N, n is an integer, m is greater than or equal to 1, m is less than or equal to M, and m is an integer.

The second matrix includes M rows * N columns of weights, and each row of weights corresponds to one radio frequency channel. Any row of weights in the second matrix corresponds to one of the M antennas, and any column of weights in the second matrix corresponds to any one of the N radio frequency channels. For example, a row of weights, namely, Y(1, 1) to Y(N, 1), is considered as a row matrix, and Y(1, 1) to Y(N, 1) correspond to an antenna 1. A column of weights, namely, Y(1, 1) to Y(1, M), is considered as a column matrix, and Y(1, 1) to Y(1, M) correspond to a radio frequency channel 1. It may be understood that, row-column transposition may occur in the second matrix. Specifically, each row matrix in the second matrix corresponds to one radio frequency channel, and each column matrix corresponds to one antenna.

Two row matrices included in any two sectors in the second matrix are orthogonal to each other. For example, Y(1, 1) to Y(N, 1) are a row matrix 1, and the row matrix 1 corresponds to an antenna 1 (a sector 1). Y(1, 5) to Y(N, 5) are a row matrix 5, and the row matrix 5 corresponds to an antenna 5 (a sector 2). A product of the row matrix 1 and the row matrix 5 is approximately equal to 0.

A sum of squares of weights of a same row in weights included in a same sector in the second matrix is equal to 1. For example, when M=12 and N=8, a sector 1 includes an antenna 1 to an antenna 4.

Y(1, 1) to Y(N, 1) form a row matrix 1, and the row matrix 1 corresponds to the antenna 1.

Y(1, 2) to Y(N, 2) form a row matrix 2, and the row matrix 2 corresponds to the antenna 2.

Y(1, 3) to Y(N, 3) form a row matrix 3, and the row matrix 3 corresponds to the antenna 3.

Y(1, 4) to Y(N, 4) are a row matrix 4, and the row matrix 4 corresponds to the antenna 4.

$[Y(1, 1)]^2 + \cdots + [Y(N, 1)]^2 = 1$.

Further, that two rows of weights corresponding to any two sectors in the second matrix are orthogonal to each other is specifically as follows:

a third submatrix and a fourth submatrix included in the second matrix, where a weight included in the third submatrix corresponds to a third sector, a weight included in the fourth submatrix corresponds to a fourth sector, the third sector corresponds to M/P antennas in the M antennas, the fourth sector corresponds to M/P antennas in the M antennas, and the antenna corresponding to the third sector is inconsistent with the antenna corresponding to the fourth sector; and
a product of any row matrix included in the third submatrix and any row matrix included in the fourth submatrix is equal to or approximately equal to 0.

In an example, when M=12 and N=8, a sector 1 includes an antenna 1 to an antenna 4, and a sector 2 includes an antenna 5 to an antenna 8.

Y(1, 1) to Y(N, 1) form a row matrix 1, and the row matrix 1 corresponds to the antenna 1 and the sector 1.

Y(1, 5) to Y(N, 5) form a row matrix 5, and the row matrix 5 corresponds to the antenna 5 and the sector 2.

When the third submatrix is the row matrix 1 to a row matrix 4 (corresponding to the antenna 1 to the antenna 4), the first sector is the sector 1, the fourth submatrix is the row matrix 5 to a row matrix 8 (corresponding to the antenna 5 to the antenna 8), and the second sector is the sector 2. A product of the row matrix 1 and the row matrix 5 is approximately equal to 0.

Further, the weights included in the second matrix satisfy a condition that the two row matrices included in any two sectors in the second matrix are orthogonal to each other, and the sum of the squares of the weights of the same column in the weights included in the same sector in the second matrix is equal to 1. When the weights included in the second matrix satisfy the foregoing condition, there are a plurality of possible design solutions for the weights included in the second matrix. This is not specifically limited in embodiments of this application. For example, in the second matrix, weights in the different sectors are inconsistent. An example in which the second matrix includes three sectors is used. A weight of a sector 1 includes C1, D1, -C1, and/or -D1. A weight of a sector 2 includes C2, D2, -C2, and/or -D2. A weight of a sector 3 includes C3, D3, -C3, and/or -D3. C1, C2, and C3 are not equal; and D1, D2, and D3 are not equal.

The design solution for the weights included in the second matrix is similar to the design solution for the weights included in the first matrix, and details are as follows:

In a possible implementation, if distinguishing is performed based on absolute values, a weight of an $H^{th}$ column in the second matrix includes: C, D, -C, and/or -D, and two adjacent weights in weights included in a same sector are: C and D, -C and -D, C and D, or -C and -D, and satisfy that $(C)^2 + (D)^2 = 2/M$, where C is greater than or equal to D, H is less than or equal to M and is greater than or equal to 1, and H is a positive integer is satisfied.

Optionally, positive and negative weights are designed, so that row matrices corresponding to the different sectors in the second matrix are orthogonal to each other. It should be noted that, the row matrices corresponding to the different sectors in the second matrix are orthogonal to each other, and the weights in the second matrix may be designed based on the positive and negative weights in the first matrix.

In another possible implementation, phase shift processing may be performed on the second matrix. Optionally, for the phase shift processing on the weights in the second matrix, refer to a processing manner on the first weight. For example, a same phase value is used. Optionally, a phase value of the phase shift processing on the weights in the second matrix may be inconsistent with a phase value of the phase shift processing on the weights in the first matrix.

In a possible implementation, a combination order of the plurality of column matrices included in the first matrix is consistent with a combination order of the plurality of row matrices included in the second matrix. For example, the combination order of the plurality of column matrices included in the first matrix is "++++", "++-", and "+-+-", where "++++" indicates that weights of the column matrices are all positive, "++-" indicates that weights of the column matrices are two positive values and two negative values, and "+-+-" indicates that weights of the column matrices are one positive value, one negative value, one positive value, and one negative value. When the combination order of the plurality of row matrices included in the second matrix is consistent with the combination order of the plurality of column matrices included in the first matrix, the combination order of the plurality of row matrices included in the second matrix is: "++++", "++-", and "+-+-", where "++++" indicates that weights of the row matrices are all positive, "++-" indicates that weights of the row matrices are two positive values and two negative values, and "+-+-" indicates that weights of the row matrices are one positive value, one negative value, one positive value, and one negative value.

It may be understood that, the combination order of the plurality of column matrices included in the first matrix may alternatively be inconsistent with the combination order of the plurality of row matrices included in the second matrix.

An embodiment of this application provides a signal processing method. A plurality of weights included in a first matrix are divided based on P sectors, and column matrices in different sectors in the first matrix are orthogonal to each other. Therefore, in a process in which signals of M baseband ports are mapped to N radio frequency channels, high irrelevancy between signals of the different sectors is ensured, and mutual interference between adjacent sectors is avoided. A communication apparatus performs, based on a second matrix, weighted processing on signals transmitted by the N radio frequency channels, and maps the signals to M antennas. A plurality of weights included in the second matrix are divided based on P sectors, and row matrices in different sectors in the second matrix are orthogonal to each other. Therefore, the signals transmitted by the M baseband ports in the N radio frequency channels may be separated based on the M baseband ports, to effectively reduce mutual interference between the signals. Phase superposition or reverse cancellation of the signals is implemented by designing the first matrix and the second matrix, so that a signal transmitted by a baseband port in a same sector is transmitted to an antenna in the same sector. In this way, power utilization of the communication apparatus is further improved.

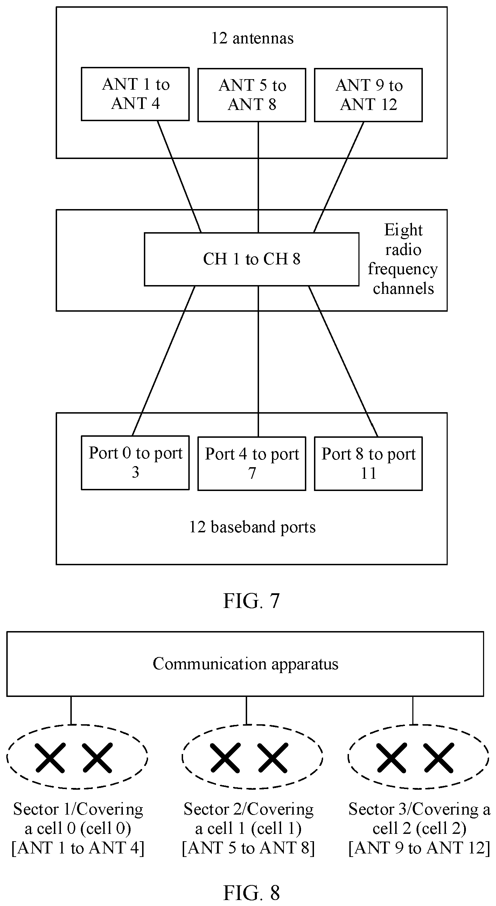

With reference to the foregoing embodiments, the following describes an application scenario provided in embodiments of this application with reference to the accompanying drawings. Refer to FIG. 7 and FIG. 8. FIG. 7 is a diagram of an application scenario according to an embodiment of this application. FIG. 8 is a diagram of another application scenario according to an embodiment of this application. As shown in FIG. 7, an example in which the communication apparatus includes 12 antennas, eight radio frequency channels, and 12 baseband ports is used. As shown in FIG. 8, the communication apparatus in FIG. 7 may divide the antennas and the baseband ports into three sectors, and each of the sectors includes four antennas (or four baseband ports). A sector 1 covers a cell 0 (cell 0), a sector 2 covers a cell 1 (cell 1), and a sector 3 covers a cell 2 (cell 2). The sector 1 corresponds to an ANT 1 to an ANT 4, the sector 2 corresponds to an ANT 5 to an ANT 8, and the sector 3 corresponds to an ANT 9 to an ANT 12.

For example, the signal processing method provided in this embodiment of this application is described by using an example in which six baseband ports (a port 0 to a port 5) in the 12 baseband ports are mapped to four radio frequency channels (a CH 1 to a CH 4) in the eight radio frequency channels, and the four radio frequency channels are mapped to six antennas (the ANT 1 to the ANT 6) in the 12 antennas. A solution in which remaining six baseband ports (a port 6 to a port 11) are mapped to four radio frequency channels (a CH 5 to a CH 8), and the four radio frequency channels are mapped to six antennas (the ANT 7 to the ANT 12) is similar to that in the foregoing descriptions. Details are not described again.

Specifically, the port 0 and the port 1 are two ports in the sector 1, the port 2 and the port 3 are two ports in the sector 2, and the port 4 and the port 5 are two ports in the sector 3.

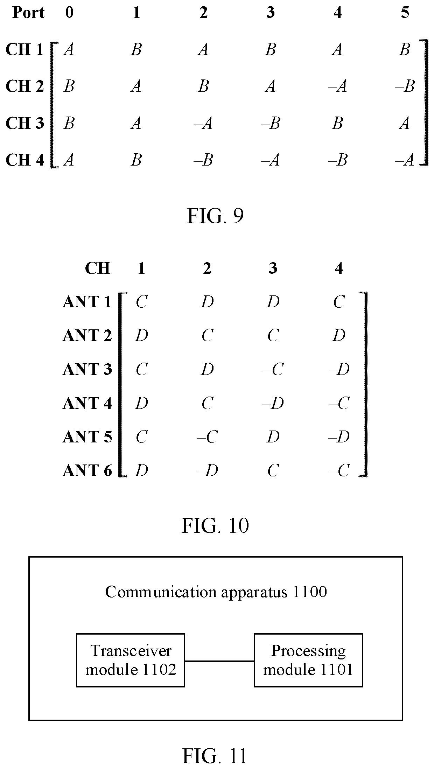

A part of a matrix corresponding to the six baseband ports (the port 0 to the port 5) and the four radio frequency channels (the CH 1 to the CH 4) in the first matrix is shown in FIG. 9. FIG. 9 is a diagram of the first matrix according to an embodiment of this application. A and B shown in FIG. 9 are weights included in the first matrix, and satisfy that $(A^2+B^2)=1/2$ and A is greater than or equal to B. For example, A=0.578, and B=0.407.

For example, the communication apparatus weights, based on the weight in the first matrix, a signal transmitted by the port 0, and maps the signal to the CH 1 to the CH 4.

A part of a matrix corresponding to the four radio frequency channels (the CH 1 to the CH 4) and the six antennas (the ANT 1 to the ANT 6) in the second matrix is shown in FIG. 10. FIG. 10 is a diagram of the second matrix according to an embodiment of this application. C and D shown in FIG. 10 are weights included in the second matrix, and satisfy that $(C^2+D^2)=1/3$ and C is greater than or equal to D.

For example, the communication apparatus weights, based on the weight in the second matrix, a signal transmitted by the CH 1, and maps the signal to the ANT 1 to the ANT 6.

After mapping is performed twice by using the first matrix and the second matrix, because of phase superposition of signals of the port 0 and the port 1, the signals of the port 0 and the port 1 are mainly sent to the ANT 1 and the ANT 2. A specific reason is that, phases mapped to the radio frequency channel 1 to the radio frequency channel 4 twice are both 0, namely, ++++, and phase superposition is implemented. During mapping of the port 0 and the port 1 to the ANT 3 and the ANT 4 and the ANT 5 and the ANT 6, because ++- or +-+- is obtained in a second time of mapping (namely, the row matrix corresponding to the second matrix), reverse cancellation is implemented, so that power at which the signals of the port 0 and the port 1 are mapped to the ANT 3 and the ANT 4, and the ANT 5 and the ANT 6 is low.

Similarly, signals of the port 2 and the port 3 are mainly mapped to the ANT 3 and the ANT 4, and the signals are sent by the ANT 3 and the ANT 4. Signals of the port 4 and the port 5 are mainly mapped to the ANT 5 and the ANT 6, and the signals are sent by the ANT 5 and the ANT 6. In this way, the ports between the sectors share four channels, then signals of ports in different sectors are mapped to different antennas, and finally the signals are received by terminals in different antenna coverage areas.

For any two ports in a same sector, the port 0 and the port 1 in the sector 1 are used as an example. It is considered that a column matrix corresponding to the port 0 in the first matrix is [A B B A], and a row matrix corresponding to the ANT 1 in the first matrix is [C D D C]. Therefore, the signal of the port 0 is mapped to the CH 1 to the CH 4 through processing of the first matrix. The signal transmitted by the CH 1 to the CH 4 (which is the signal of the port 0) is mapped to the antenna 1 through processing of the second matrix, and a size of the signal mapped to the antenna 1 is 2AC+2DC. A size of the signal mapped from the port 0 to the ANT 2 is 2AD + 2CB. When A > B > 0 and C > D > 0, 2AC + 2DC > 2AD + 2CB. Therefore, the signal of the port 0 is mainly mapped to the ANT 1, and the signal of the port 1 is mainly mapped to the ANT 2, so that the signals of the port 0 and the port 1 are mapped to the different antennas, to distinguish between signals of a plurality of ports in the sector.

When the communication apparatus shown in FIG. 7 transmits the signal by using the foregoing signal processing method, a possible simulation experiment scenario is as follows: A signal transmitted by each baseband port sector is mapped to an antenna sector corresponding to the baseband port sector (where radiated power of the antenna sector accounts for 98% of total radiated power of the baseband port sector), and radiated power of another antenna sectors is 1%. In this way, interference is effectively reduced.

In embodiments of this application, the communication apparatus may be divided into functional modules based on the foregoing method examples. For example, functional modules may be obtained through division based on corresponding functions, or two or more functions may be integrated into one processing module. The foregoing integrated module may be implemented in a form of hardware, or may be implemented in a form of a software functional module. It should be noted that, division of the modules in embodiments of this application is an example, and is merely logical function division. In an actual implementation, there may be another division manner.

The following describes in detail communication apparatuses in this application. FIG. 11 is a diagram of an embodiment of a communication apparatus 1100 according to an embodiment of this application.

In a possible implementation, the communication apparatus 1100 includes a processing module 1101 and a transceiver module 1102 connected to the processing module 1101. The processing module 1101 is configured to process information transmitted by the transceiver module 1102.

The communication apparatus 1100 includes M baseband ports, N radio frequency channels, and M antennas, where M is greater than N, M is a positive integer, and N is a positive integer.

The processing module 1101 is configured to divide the M baseband ports into P sectors, and divide the M antennas into P sectors, where M is a multiple of P, and P is a positive integer.

The processing module 1101 is further configured to perform, based on a first matrix, weighted processing on signals transmitted by the M baseband ports, and map the signals to the N radio frequency channels, where a plurality of weights included in the first matrix are divided based on the P sectors, each column of weights in the first matrix forms a column matrix, and column matrices in different sectors in the first matrix are orthogonal to each other.

The processing module 1101 is further configured to perform, based on a second matrix, weighted processing on signals transmitted by the N radio frequency channels, and map the signals to the M antennas, to transmit, to an antenna in a same sector, a signal transmitted by a baseband port in the same sector, where a plurality of weights included in the second matrix are divided based on the P sectors, each row of weights in the second matrix forms a row matrix, and row matrices in different sectors in the second matrix are orthogonal to each other.

In a possible implementation, the first matrix includes:

The first matrix includes N rows * M columns of weights, and each column of weights corresponds to a baseband port in one sector;

any row of weights in the first matrix corresponds to one of the N radio frequency channels, and any column of weights in the first matrix corresponds to any one of the M baseband ports;

two column matrices included in any two sectors in the first matrix are orthogonal to each other; and

a sum of squares of weights of a same column in weights included in a same sector in the first matrix is equal to 1.

In a possible implementation, the second matrix includes:

The second matrix includes M rows * N columns of weights, and each row of weights corresponds to an antenna in one sector;

any row of weights in the second matrix corresponds to one of the M antennas, and any column of weights in the second matrix corresponds to any one of the N radio frequency channels;

two row matrices included in any two sectors in the second matrix are orthogonal to each other; and

a sum of squares of weights of a same row in weights included in a same sector in the second matrix is equal to 1.

In a possible implementation, that the two column matrices included in any two sectors in the first matrix are orthogonal to each other includes:

a first submatrix and a second submatrix included in the first matrix, where a weight included in the first submatrix corresponds to a first sector, a weight included in the second submatrix corresponds to a second sector, the first sector corresponds to M/P baseband ports in the M baseband ports, the second sector corresponds to M/P baseband ports in the M baseband ports, and the baseband port corresponding to the first sector is inconsistent with the baseband port corresponding to the second sector; and

a product of any column matrix included in the first submatrix and any column matrix included in the second submatrix is equal to or approximately equal to 0.

In a possible implementation, that the sum of the squares of the weights of the same column in the weights included in the same sector in the first matrix is equal to 1 includes:

A weight of a $K^{th}$ row in the first matrix includes A, B, -A, and/or -B.

Two adjacent weights in the weights included in the same sector are: A and B, or -A and -B, and A and B, or -A and -B satisfy that $(A)^2+(B)^2=2/N$ and A is greater than or equal to B.

K is less than or equal to N and is greater than or equal to 1, and K is a positive integer.

In a possible implementation, that the two rows of weights corresponding to any two sectors in the second matrix are orthogonal to each other includes:

a third submatrix and a fourth submatrix included in the second matrix, where a weight included in the third submatrix corresponds to a third sector, a weight included in the fourth submatrix corresponds to a fourth sector, the third sector corresponds to M/P antennas in the M antennas, the fourth sector corresponds to M/P antennas in the M antennas, and the antenna corresponding to the third sector is inconsistent with the antenna corresponding to the fourth sector; and

a product of any row matrix included in the third submatrix and any row matrix included in the fourth submatrix is equal to or approximately equal to 0.

In a possible implementation, that the sum of the squares of the weights of the same row in the weights included in the same sector in the second matrix is equal to 1 includes:

A weight of an $H^{th}$ column in the second matrix includes: C, D, -C, and/or -D.

Two adjacent weights in the weights included in the same sector are: C and D, or -C and -D, and C and D, or -C and -D satisfy that $(C)^2+(D)^2=2/M$ and C is greater than or equal to D.

H is less than or equal to M and is greater than or equal to 1, and H is a positive integer.

In a possible implementation, a combination order of a plurality of column matrices included in the first matrix is consistent with a combination order of a plurality of row matrices included in the second matrix.

In a possible implementation, the processing module 1101 is further configured to adjust a weight corresponding to the baseband port in the first matrix.

In a possible implementation, the weight corresponding to the baseband port in the first matrix includes: a positive first weight, a negative first weight, a positive second weight, and/or a negative second weight; and

when load of the baseband port increases, the processing module 1101 increases a difference between the first weight and the second weight.

In a possible implementation, when only M/P baseband ports corresponding to a target sector in the M baseband ports corresponding to the P sectors have data to be transmitted,

the processing module 1101 is further configured to set weights corresponding to the target sector in the first matrix to 1 and 0.

In a possible implementation, the weight corresponding to the baseband port in the first matrix includes: a positive first weight, a negative first weight, a positive second weight, and/or a negative second weight; and

the processing module 1101 is further configured to make the first weight and the second weight to be equal, to increase a diversity gain of the baseband port.

In a possible implementation, 2M=3N.

An embodiment of this application further provides a communication apparatus. The communication apparatus includes a memory, including instructions; and a processor. When the processor executes the instructions, the communication apparatus is caused to implement the signal processing method provided in the foregoing embodiments.

An embodiment of this application further provides a network device. The network device includes the communication apparatus provided in the foregoing embodiments.

An embodiment of this application further provides a communication system. The communication system includes the network device in the foregoing embodiments. The communication apparatus included in the network device is configured to perform any one of the implementations described in the foregoing embodiments.

An embodiment of this application further provides a computer program product. The computer program product includes computer program code. When the computer program code is run on a computer, the computer is caused to perform any one of the implementations described in the foregoing method embodiments.

An embodiment of this application further provides a chip system, including a memory and a processor. The memory is configured to store a computer program, and the processor is configured to invoke the computer program from the memory and run the computer program, to cause the chip to perform any one of the implementations described in the foregoing method embodiments.

An embodiment of this application further provides a chip system, including a processor. The processor is configured to invoke and run a computer program, to cause the chip to perform any one of the implementations described in the foregoing method embodiments.

In addition, it should be noted that, the apparatus embodiments described above are merely examples. Units described as separate parts may or may not be physically separate, and parts displayed as units may or may not be physical units, to be specific, may be located at one position or may be distributed on a plurality of network units. Some or all of the modules may be selected based on an actual requirement, to achieve the objectives of the solutions of embodiments. In addition, in the accompanying drawings of the apparatus embodiments provided in this application, a connection relationship between the modules indicates that there is a communication connection between the modules. Specifically, this may be implemented as one or more communication buses or signal cables.

Through descriptions of the foregoing implementations, a person skilled in the art may clearly understand that, this application may be implemented by using software in addition to necessary universal hardware, or certainly by using dedicated hardware, including a dedicated integrated circuit, a dedicated CPU, a dedicated memory, a dedicated component, and the like. Generally, any function completed by a computer program may be easily implemented by using corresponding hardware. In addition, a specific hardware structure used for implementing a same function may also be in various forms, for example, in a form of an analog circuit, a digital circuit, or a dedicated circuit. However, for this application, a software program implementation is a better implementation in most cases. Based on such an understanding, the technical solutions of this application essentially, or the part contributing to a conventional technology may be implemented in a form of a software product. The computer software product is stored in a readable storage medium, such as a floppy disk, a USB flash drive, a removable hard disk drive, a ROM, a RAM, a magnetic disk, or an optical disk of a computer, and includes a plurality of instructions for instructing a computer device to perform the methods in embodiments of this application.

All or some of the foregoing embodiments may be implemented by using software, hardware, firmware, or any combination thereof. When software is used for implementing embodiments, all or some of embodiments may be implemented in a form of a computer program product.

The computer program product includes one or more computer instructions. When the computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a network apparatus, a computing device, or a data center to another website, computer, network apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium that can be stored in a computer, or a data storage device, such as a network apparatus or a data center, including one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

It should be understood that, "one embodiment" or "an embodiment" mentioned throughout the specification means that particular features, structures, or characteristics related to embodiments are included in one or more embodiments of this application. Therefore, "in one embodiment" or "in an embodiment" appearing throughout the specification does not necessarily refer to a same embodiment. In addition, the particular features, structures, or characteristics may be combined in one or more embodiments in any suitable manner. It should be understood that, in various embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with examples described in embodiments disclosed in this specification, units and algorithm steps can be implemented by electronic hardware, computer software, or a combination thereof. To clearly describe interchangeability between the hardware and the software, the foregoing descriptions have generally described compositions and steps of each example based on functions. Whether the functions are performed by hardware or software depends on particular applications and design constraint conditions of the technical solutions. A person skilled in the art may use different methods to implement the described functions for each particular application, but it should not be considered that such an implementation falls beyond the scope of this application.

It may be clearly understood by a person skilled in the art that, for the purpose of convenient and brief description, for a specific working process of the foregoing systems, apparatuses, and units, refer to a corresponding process in the foregoing method embodiments. Details are not described herein again.

In several embodiments provided in this application, it should be understood that, the disclosed systems, apparatuses, and methods may be implemented in other manners. For example, apparatus embodiments described above are merely examples. For example, division of the units is merely logical function division. In an actual implementation, there may be another division manner. For example, a plurality of units or components may be combined or integrated to another system, or some features may be ignored or not performed. In addition, displayed or discussed mutual couplings or direct couplings or communication connections may be implemented through some interfaces, apparatuses, or units, or may be in electronic, mechanical, or other forms.

Units described as separate parts may or may not be physically separate, and parts displayed as units may or may not be physical units, to be specific, may be located at one position, or may be distributed on a plurality of network units. Some or all of the units may be selected based on an actual requirement, to achieve the objectives of the solutions of embodiments.

In addition, functional units in embodiments of this application may be integrated into one processing unit, or may exist alone physically, or two or more units may be integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes a plurality of instructions for instructing a computer device (which may be a personal computer, a server, a network device, or the like) to perform all or some of the steps of the methods in embodiments of this application.

In summary, the foregoing descriptions are merely preferred embodiments of the technical solutions of this application, but are not intended to limit the protection scope of this application. Any modification, equivalent replacement, improvement, and the like made within the spirit and principle of this application shall fall within the protection scope of this application.

## Claims

1.    A signal processing method, wherein the method is applied to a communication apparatus, and the communication apparatus comprises M baseband ports, N radio frequency channels, and M antennas, wherein M is greater than N, M is a positive integer, and N is a positive integer; and the method comprises:

dividing, by the communication apparatus, the M baseband ports into P sectors, and dividing the M antennas into P sectors, wherein M is a multiple of P, and P is a positive integer;
performing, by the communication apparatus based on a first matrix, weighted processing on signals transmitted by the M baseband ports, and mapping the signals to the N radio frequency channels, wherein a plurality of weights comprised in the first matrix are divided based on the P sectors, each column of weights in the first matrix forms a column matrix, and column matrices in different sectors in the first matrix are orthogonal to each other; and
performing, by the communication apparatus based on a second matrix, weighted processing on signals transmitted by the N radio frequency channels, and mapping the signals to the M antennas, to transmit, to an antenna in a same sector, a signal transmitted by a baseband port in the same sector, wherein a plurality of weights comprised in the second matrix are divided based on the P sectors, each row of weights in the second matrix forms a row matrix, and row matrices in different sectors in the second matrix are orthogonal to each other.

2. The method according to claim 1, wherein the first matrix comprises:

the first matrix comprises N rows * M columns of weights, and each column of weights corresponds to a baseband port in one sector;
any row of weights in the first matrix corresponds to one of the N radio frequency channels, and any column of weights in the first matrix corresponds to any one of the M baseband ports;
two column matrices comprised in any two sectors in the first matrix are orthogonal to each other; and
a sum of squares of weights of a same column in weights comprised in a same sector in the first matrix is equal to 1.

3. The method according to claim 1 or 2, wherein the second matrix comprises:

the second matrix comprises M rows * N columns of weights, and each row of weights corresponds to an antenna in one sector;
any row of weights in the second matrix corresponds to one of the M antennas, and any column of weights in the second matrix corresponds to any one of the N radio frequency channels;
two row matrices comprised in any two sectors in the second matrix are orthogonal to each other; and
a sum of squares of weights of a same row in weights comprised in a same sector in the second matrix is equal to 1.

4. The method according to claim 2 or 3, wherein that the two column matrices comprised in any two sectors in the first matrix are orthogonal to each other comprises:

a first submatrix and a second submatrix comprised in the first matrix, wherein a weight comprised in the first submatrix corresponds to a first sector, a weight comprised in the second submatrix corresponds to a second sector, the first sector corresponds to M/P baseband ports in the M baseband ports, the second sector corresponds to M/P baseband ports in the M baseband ports, and the baseband port corresponding to the first sector is inconsistent with the baseband port corresponding to the second sector; and
a product of any column matrix comprised in the first submatrix and any column matrix comprised in the second submatrix is equal to or approximately equal to 0.

5. The method according to claim 3 or 4, wherein that the two rows of weights corresponding to any two sectors in the second matrix are orthogonal to each other comprises:

a third submatrix and a fourth submatrix comprised in the second matrix, wherein a weight comprised in the third submatrix corresponds to a third sector, a weight comprised in the fourth submatrix corresponds to a fourth sector, the third sector corresponds to M/P antennas in the M antennas, the fourth sector corresponds to M/P antennas in the M antennas, and the antenna corresponding to the third sector is inconsistent with the antenna corresponding to the fourth sector; and
a product of any row matrix comprised in the third submatrix and any row matrix comprised in the fourth submatrix is equal to or approximately equal to 0.

6. The method according to any one of claims 1 to 5, wherein
a combination order of a plurality of column matrices comprised in the first matrix is consistent with a combination order of a plurality of row matrices comprised in the second matrix.

7. The method according to any one of claims 1 to 6, wherein the method further comprises:
adjusting, by the communication apparatus, a weight corresponding to the baseband port in the first matrix.

8. The method according to claim 7, wherein the adjusting, by the communication apparatus, a weight corresponding to the baseband port in the first matrix comprises:

the weight corresponding to the baseband port in the first matrix comprises: a positive first weight, a negative first weight, a positive second weight, and/or a negative second weight; and
when load of the baseband port increases, increasing, by the communication apparatus, a difference between the first weight and the second weight.

9. The method according to claim 7, wherein the adjusting, by the communication apparatus, a weight corresponding to the baseband port in the first matrix comprises:

when only M/P baseband ports corresponding to a target sector in the M baseband ports corresponding to the P sectors have data to be transmitted,
setting, by the communication apparatus, weights corresponding to the target sector in the first matrix to 1 and 0.

10. The method according to claim 7, wherein the adjusting, by the communication apparatus, a weight corresponding to the baseband port in the first matrix comprises:

the weight corresponding to the baseband port in the first matrix comprises: a positive first weight, a negative first weight, a positive second weight, and/or a negative second weight; and making, by the communication apparatus, the first weight and the second weight to be equal, to increase a diversity gain of the baseband port.

11. The method according to any one of claims 1 to 10, wherein 2M=3N.

12. A communication apparatus, wherein the communication apparatus comprises a processing module and a transceiver module connected to the processing module, wherein the processing module is configured to process information transmitted by the transceiver module;

the communication apparatus comprises M baseband ports, N radio frequency channels, and M antennas, wherein M is greater than N, M is a positive integer, and N is a positive integer; the processing module is configured to divide the M baseband ports into P sectors, and divide the M antennas into P sectors, wherein M is a multiple of P, and P is a positive integer; the processing module is further configured to perform, based on a first matrix, weighted processing on signals transmitted by the M baseband ports, and map the signals to the N radio frequency channels, wherein a plurality of weights comprised in the first matrix are divided based on the P sectors, each column of weights in the first matrix forms a column matrix, and column matrices in different sectors in the first matrix are orthogonal to each other; and the processing module is further configured to perform, based on a second matrix, weighted processing on signals transmitted by the N radio frequency channels, and map the signals to the M antennas, to transmit, to an antenna in a same sector, a signal transmitted by a baseband port in the same sector, wherein a plurality of weights comprised in the second matrix are divided based on the P sectors, each row of weights in the second matrix forms a row matrix, and row matrices in different sectors in the second matrix are orthogonal to each other.

13. A communication apparatus, wherein the communication apparatus comprises:

a memory, comprising instructions; and a processor, wherein when the processor executes the instructions, the communication apparatus is caused to implement the method according to any one of claims 1 to 11.

14. A computer-readable storage medium, wherein the computer-readable storage medium stores a computer program, and when the computer program is executed by a processor, the method according to any one of claims 1 to 11 is implemented.

15. A computer program product, comprising a computer program, wherein when the computer program is executed by a processor, the method according to any one of claims 1 to 11 is implemented.

FIG. 1

FIG. 2

301: A communication apparatus performs, based on a first matrix, weighted processing on signals transmitted by M baseband ports, and maps the signals to N radio frequency channels

302: The communication apparatus performs, based on a second matrix, weighted processing on signals transmitted by the N radio frequency channels, and maps the signals to M antennas

FIG. 3

| Baseband port 0 | | Radio frequency channel 0 | | Antenna 0 |

| Baseband port 1 | | Radio frequency channel 1 | | Antenna 1 |

...

| Baseband port M | | Radio frequency channel N | | Antenna M |

M>N

FIG. 4

Correspond to M baseband ports (ports)
(Divide the M baseband ports into P sectors)

Weight

Correspond to N
radio frequency
channels (CHs)

$$\begin{bmatrix} X(0, 1) & \cdots & X(M{-}1, 1) \\ \vdots & \ddots & \vdots \\ X(0, N) & \cdots & X(M{-}1, N) \end{bmatrix}$$

First matrix

One column
matrix

FIG. 5

Correspond to N radio
frequency channels (CHs)

One row
matrix

Y(1, 1)        ...        Y(N, 1)

Correspond to M
antennas (ANTs)
(Divide the M
antennas into P
sectors)

Y(1, M)    ...    Y(N, M)

Second matrix

Weight

FIG. 6

12 antennas

| ANT 1 to ANT 4 | ANT 5 to ANT 8 | ANT 9 to ANT 12 |

CH 1 to CH 8

Eight radio frequency channels

| Port 0 to port 3 | Port 4 to port 7 | Port 8 to port 11 |

12 baseband ports

FIG. 7

Communication apparatus

Sector 1/Covering
a cell 0 (cell 0)
[ANT 1 to ANT 4]

Sector 2/Covering
a cell 1 (cell 1)
[ANT 5 to ANT 8]

Sector 3/Covering a
cell 2 (cell 2)
[ANT 9 to ANT 12]

FIG. 8

| Port | 0 | 1 | 2 | 3 | 4 | 5 |
|------|---|---|---|---|---|---|
| CH 1 | $A$ | $B$ | $A$ | $B$ | $A$ | $B$ |
| CH 2 | $B$ | $A$ | $B$ | $A$ | $-A$ | $-B$ |
| CH 3 | $B$ | $A$ | $-A$ | $-B$ | $B$ | $A$ |
| CH 4 | $A$ | $B$ | $-B$ | $-A$ | $-B$ | $-A$ |

FIG. 9

| CH | 1 | 2 | 3 | 4 |
|------|---|---|---|---|
| ANT 1 | $C$ | $D$ | $D$ | $C$ |
| ANT 2 | $D$ | $C$ | $C$ | $D$ |
| ANT 3 | $C$ | $D$ | $-C$ | $-D$ |
| ANT 4 | $D$ | $C$ | $-D$ | $-C$ |
| ANT 5 | $C$ | $-C$ | $D$ | $-D$ |
| ANT 6 | $D$ | $-D$ | $C$ | $-C$ |

FIG. 10

Communication apparatus 1100

Transceiver module 1102 — Processing module 1101

FIG. 11

## INTERNATIONAL SEARCH REPORT

| International application No. |
| --- |
| **PCT/CN2023/110711** |

| A. | CLASSIFICATION OF SUBJECT MATTER |
| --- | --- |

H04B7/0413(2017.01)i

According to International Patent Classification (IPC) or to both national classification and IPC

| B. | FIELDS SEARCHED |
| --- | --- |

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 信号, 基带, 端口, 射频通道, 天线, 扇区, 加权, 矩阵, 大于, 小于, 映射, 干扰, 正交, signal, baseband, port, channel, antenna, sector, weight, matrix, greater, lesser, map, interfere, quadrature

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 104170274 A (HUAWEI TECHNOLOGIES CO., LTD.) 26 November 2014 (2014-11-26) description, paragraphs [0006]-[0040] | 1-15 |
| A | CN 106603129 A (SHANGHAI HUAWEI TECHNOLOGIES CO., LTD.) 26 April 2017 (2017-04-26) entire document | 1-15 |
| A | US 2015131750 A1 (XUE FENG et al.) 14 May 2015 (2015-05-14) entire document | 1-15 |
| A | US 2021152225 A1 (HUAWEI TECHNOLOGIES CO., LTD.) 20 May 2021 (2021-05-20) entire document | 1-15 |
| A | HUAWEI et al. "3GPP TSG RAN WG1 Meeting #82bis R1-155077" *Codebook Design for 16 Ports 2D Antenna Arrays*, 26 September 2015 (2015-09-26), entire document | 1-15 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 October 2023** | **09 November 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110711**

| Patent document cited in search report | | | Publication date (day/month/year) | Patent family member(s) | | | Publication date (day/month/year) |
|---|---|---|---|---|---|---|---|
| CN | 104170274 | A | 26 November 2014 | None | | | |
| CN | 106603129 | A | 26 April 2017 | None | | | |
| US | 2015131750 | A1 | 14 May 2015 | US | 9461727 | B2 | 04 October 2016 |
| US | 2021152225 | A1 | 20 May 2021 | None | | | |

**REFERENCES CITED IN THE DESCRIPTION**

**Patent documents cited in the description**

- CN 202210976651